# FASCICULE DE BREVET EUROPEEN

(11) **EP 3 822 516 B1**
(45) Date de publication et mention de la délivrance du brevet: **15.02.2023**
(21) Numéro de dépôt: 20207561.0
(22) Date de dépôt: 13.11.2020
(51) Int. Cl.: F16H 57/04, F16H 57/08, F01D 25/18, F01D 15/12, F02C 7/06

(54) **ROUET ETAGE POUR L'ALIMENTATION EN HUILE D'UN REDUCTEUR EPICYCLOÏDAL OU PLANETAIRE**
STUFENRAD ZUR ÖLVERSORGUNG EINES EPIZYKLOIDALEN UNTERSETZUNGS- ODER PLANETENGETRIEBES
STAGE IMPELLER FOR SUPPLYING OIL TO AN EPICYCLIC OR PLANETARY REDUCTION GEAR

(30) Priorité: 15.11.2019 FR 1912786
(43) Date de publication de la demande: 19.05.2021
(73) Titulaire: Safran Transmission Systems, 92700 Colombes (FR)
(72) Inventeur: PENNACINO, Antoine Jacques Marie, 77550 MOISSY-CRAMAYEL (FR); DI GIOVANNI,, Jean-Charles Michel Pierre, 77550 MOISSY-CRAMAYEL (FR)
(74) Mandataire: Gevers & Orès

(56) Documents cités:
- US-A1- 2013 051 984
- US-A1- 2013 287 553
- US-A1- 2016 377 167
- US-A1- 2019 301 466
- US-B2- 10 458 535

## Description

### Domaine technique de l'invention

Le domaine de la présente invention est celui des dispositifs d'alimentation en huile des réducteurs, plus particulièrement des systèmes de transmission différentielle dans des turbomachines, notamment les réducteurs à train épicycloïdal ou planétaire.

### Arrière-plan technique

Les turbomachines actuelles, notamment les turbomachines comportant une ou plusieurs hélices soufflant un flux secondaire, comprennent un système de transmission, appelé réducteur, pour entraîner cette ou ces hélices à une vitesse de rotation adéquate à partir de l'arbre de la turbine de puissance du corps primaire du moteur.

Le rôle d'un réducteur mécanique est de modifier le rapport de vitesse et le couple entre l'axe d'entrée et l'axe de sortie d'un mécanisme.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound.
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Il existe plusieurs types d'engrènement par contact comme avec des dentures droites ou en chevron.

Les réducteurs à train épicycloïdal, en particulier, ont l'avantage d'offrir des taux de réduction importants de la vitesse de rotation dans des encombrements réduits. En revanche, comme les réducteurs différentiels, ils présentent l'inconvénient d'avoir des pignons de satellites qui se déplacent en tournant autour de l'axe de rotation de l'arbre d'entraînement du réducteur, qui est coaxial au planétaire. Ils nécessitent donc des dispositifs permettant de transférer l'huile issue d'un réservoir et d'une pompe situés dans un repère fixe vers des moyens de lubrification qui suivent le déplacement en rotation des axes des pignons de satellites autour de l'arbre d'entraînement. Pour résoudre ce problème, les dispositifs couramment utilisés comprennent des systèmes de joints tournants.

Ces systèmes ont pour inconvénients un encombrement conséquent et une usure qui est peu compatible des durées de vie exigées pour les moteurs aéronautiques, ce qui impacte la maintenance desdits moteurs. Enfin, ces réducteurs sont difficilement compatibles avec un montage souple de la structure de la turbomachine, préconisé par exemple pour palier un problème de perte ou de rupture d'une pale de l'hélice de soufflante, ou encore avec un montage de type modulaire, pour faciliter l'assemblage du moteur.

Dans le but de remédier à ces inconvénients, la demanderesse a déjà proposé, dans les demandes WO-A1-2010/092263, FR-A1-2987416, WO-2019/16463-A1 et WO-2019/16491-A1 des dispositifs de lubrification sans joints tournants, où un système d'injection d'huile comportant un moyen d'alimentation comportant des gicleurs fait gicler l'huile provenant d'un circuit lié au repère fixe vers un dispositif d'alimentation en huile (dit « rouet » ou « distributeur ») comportant une coupelle solidaire d'un porte-satellites. La coupelle, qui est en rotation avec le dispositif d'alimentation en huile (dit « rouet » ou « distributeur ») autour du moyen d'injection, confine l'huile récupérée par centrifugation avant de la diriger vers les moyens de lubrification des pignons.

Ces dispositifs améliorent ainsi fortement la fiabilité du système de lubrification du réducteur ainsi que sa maintenance.

Par ailleurs, la solution technique décrite dans la demande FR-3.047.279-A1 tente d'ajuster le débit d'huile allant vers différents engrenages en fonction de leurs besoins en lubrification. Pour cela, la coupelle de réception du dispositif d'alimentation en huile est segmentée en tronçons suivant l'axe de rotation et des moyens d'alimentation décalés axialement comportant des gicleurs décalés axialement qui alimentent ces tronçons. Ces tronçons délimitent des cavités associées à des circuits différents, qui communiquent l'une avec l'autre par débordement. L'huile récupérée par chaque tronçon axial est ensuite dirigée vers un circuit dédié à un type d'engrenage ou autre organe à lubrifier.

Cette solution ne permet cependant pas de moduler la répartition du débit d'huile entre les tronçons en fonction du régime de la turbomachine. De plus, elle est relativement complexe avec des gicleurs placés sur un même diamètre et dédiés à chaque tronçon axial. Par ailleurs, la multiplication du nombre de gicleurs et leur proximité peut poser des questions de fiabilité.

La solution technique décrite dans la demande FR-3.041.054-A1 tente elle aussi d'ajuster le débit d'huile allant vers différents postes de lubrification comme des engrenages en fonction de leurs besoins en lubrification. Pour cela, la coupelle de réception du dispositif d'alimentation en huile (dit « rouet » ou « distributeur ») est segmentée en une succession circonférentielle de cuvettes agencées autour de l'axe de rotation et des gicleurs d'un moyen d'injection du système d'injection d'huile alimentent ces tronçons. L'huile récupérée par chaque cuvette est ensuite dirigée vers un circuit dédié à un poste de lubrification particulier.

Cette solution ne permet cependant pas de moduler la répartition du débit d'huile entre les postes de lubrification devant être alimentés autrement qu'en modulant le débit d'huile que chaque cuvette fournit au circuit qui lui est associé, car les cuvettes sont alimentées par les mêmes gicleurs du même moyen d'alimentation et donc avec le même débit. Cette solution ne permet pas non plus de différencier le type de lubrifiant utilisé, notamment en termes de viscosité, de température ou de filtration, afin d'utiliser des lubrifiants ayant des propriétés différentes adaptés aux besoins des organes ou engrenages à lubrifier. De plus, l'alimentation des cuvettes est sensiblement irrégulière car elle implique le passage des cuvettes devant les gicleurs.

En outre, dans ces deux conceptions, les circuits d'huile étant alimentés par des tronçons axiaux de coupelle ou des réservoirs qui sont tous placés sensiblement suivant les mêmes diamètres, les circuits qui sont placés sur les diamètres les plus élevés subissent d'importantes pertes de charge.

Pour remédier à ces inconvénients on a proposé dans le document US-2016/377167-A1 un dispositif d'alimentation en huile comportant deux coupelles annulaires de lubrification, étagées et coaxiales, alimentant chacune des circuits de distribution d'huile différents du réducteur et configurées pour recevoir de l'huile de deux moyen d'injections d'huile, de manière à former deux étages de lubrification séparés. Les moyens d'injection d'huile sont des rampes d'injection fournissant des jets d'huiles de manière centrifuge. Par conséquent, les rampes d'injection sont proches de l'axe du réducteur et sont difficiles à monter.

L'invention a pour but de pallier à cet inconvénient, tout en améliorant les avantages des solutions techniques proposées dans les demandes précitées.

### Résumé de l'invention

L'invention concerne à cet effet un dispositif d'alimentation en huile comme dans la revendication indépendante 1. Des modes de réalisation particuliers de l'invention sont exposés dans les revendications dépendantes.

Selon d'autres caractéristiques du dispositif d'alimentation :
- le dispositif comporte au moins :
   - une première coupelle annulaire, dont le circuit de distribution d'huile associé comporte une pluralité de gicleurs répartis angulairement autour de l'axe X et qui alimentent en huile le pignon solaire et /ou les satellites, et
   - une deuxième coupelle annulaire dont le circuit de distribution d'huile associé alimente en huile des paliers de satellites sur le porte-satellites,
- la gouttière comporte des ailettes s'étendant sensiblement suivant une direction radiale et qui sont agencées dans ladite partie interne pour entraîner l'huile par centrifugation vers des fonds des réservoirs,
- les ailettes sont radiales ou bien inclinées par rapport à la direction radiale, et/ou présentent un profil d'aube,
- chaque coupelle est reliée à la coupelle voisine par des bras structuraux,
- au moins une coupelle comporte une surépaisseur apte à être usinée localement pour permettre l'équilibrage de ladite coupelle,
- au moins une coupelle comporte une zone apte à recevoir au moins une masselotte d'équilibrage de ladite coupelle.

L'invention concerne aussi un système d'injection d'huile pour l'alimentation en huile d'un dispositif d'alimentation en huile du type décrit précédemment caractérisé en ce qu'il est étagé et comporte au moins deux moyens d'injection d'huile distincts alimentant chacun une coupelle correspondante du dispositif.

Selon d'autres caractéristiques du système d'injection d'huile :
- chaque moyen d'injection d'huile d'une coupelle comporte une rampe d'injection tubulaire annulaire, ou une pluralité de tronçons angulaires de rampe tubulaire annulaire, de diamètre sensiblement légèrement supérieur à celui la coupelle correspondante, comportant des perçages répartis circonférentiellement et destinés à être orientés vers l'ouverture de la gouttière de la coupelle correspondante et au moins un conduit principalement radial d'alimentation en huile de ladite rampe annulaire ou dudit tronçon angulaire de rampe annulaire,
- chaque moyen d'injection d'huile est alimenté avec une huile adaptée au besoin d'un organe du réducteur qui est lubrifié par la coupelle correspondante.

L'invention concerne enfin un ensemble de lubrification pour un réducteur à train épicycloïdal ou différentiel, caractérisé en ce qu'il comporte un dispositif d'alimentation en huile selon l'une des revendications et un système d'injection d'huile du type décrits précédemment.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique en coupe axiale d'une turbomachine utilisant l'invention ;
[Fig. 2] La figure 2 est une vue partielle en coupe axiale d'un réducteur mécanique;
[Fig. 3] La figure 3 est une vue en coupe axiale d'un réducteur à train épicycloïdal équipé d'un dispositif d'alimentation en huile selon l'invention ;
[Fig. 4] La figure 4 est une vue en coupe transversale par le plan 4-4 de la figure 3 du réducteur à train épicycloïdal équipé d'un dispositif d'alimentation en huile selon l'invention ;
[Fig. 5] La figure 5 est une vue de détail de la figure 3 qui montre une deuxième coupelle du dispositif d'alimentation en huile;
[Fig. 6] La figure 6 est une vue de détail de la figure 4 qui montre la deuxième coupelle du dispositif d'alimentation en huile;
[Fig. 7] La figure 7 est une vue de détail de la figure 3 qui montre une première coupelle du dispositif d'alimentation en huile;
[Fig. 8] La figure 8 est une vue de détail de la figure 4 qui montre la première coupelle du dispositif d'alimentation en huile;
[Fig. 9] La figure 9 est une vue en perspective d'un système d'injection d'huile pour un dispositif d'alimentation en huile selon l'invention ;
[Fig.10] La figure 10 est un diagramme-bloc illustrant les étapes d'un procédé d'assemblage d'un réducteur à train épicycloïdal ou planétaire comportant un ensemble de lubrification selon l'invention.

### Description détaillée de l'invention

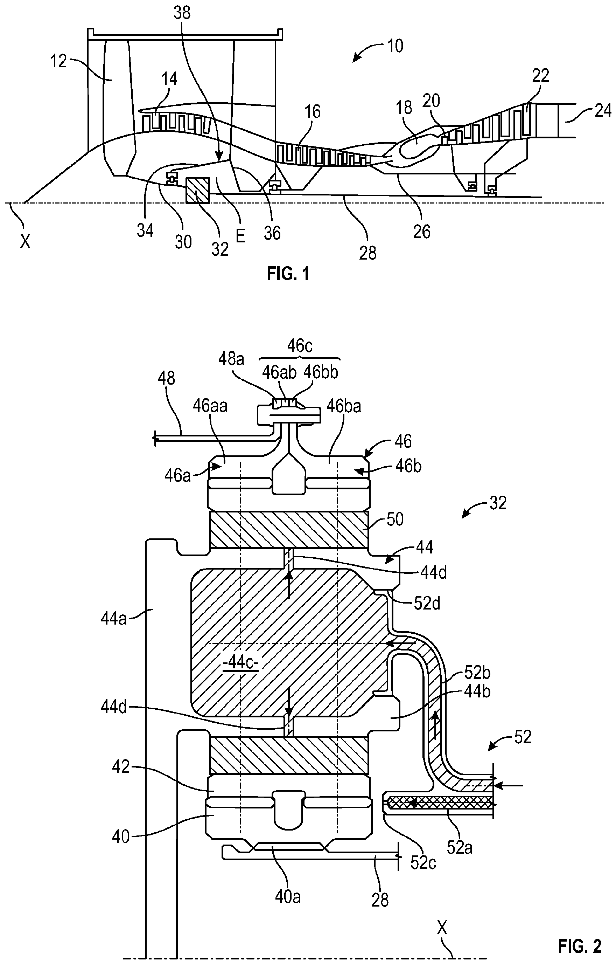

La figure 1 décrit une turbomachine 10 qui comporte, de manière classique, une soufflante 12, un compresseur basse pression 14, un compresseur haute pression 16, une chambre annulaire de combustion 18, une turbine haute pression 20, une turbine basse pression 22 et une tuyère d'échappement24. Le compresseur haute pression 16 et la turbine haute pression 20 sont reliés par un arbre haute pression 26 et forment avec lui un corps haute pression (HP). Le compresseur basse pression 14 et la turbine basse pression 20 sont reliés par un arbre basse pression 28 et forment avec lui un corps basse pression (BP).

La soufflante 12 est entraînée par un arbre de soufflante 30 qui est entrainé par l'arbre BP 28 au moyen d'un réducteur 32. Ce réducteur 32 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 32 est positionné dans la partie amont de la turbomachine. Une structure fixe comportant schématiquement, ici, une partie amont 34 et une partie aval 36 qui compose le carter moteur ou stator 38 est agencée de manière à former une enceinte E entourant le réducteur 32. Cette enceinte E est ici fermée en amont par des joints au niveau d'un palier permettant la traversée de l'arbre de soufflante 30, et en aval par des joints au niveau de la traversée de l'arbre BP 28.

La figure 2 montre un réducteur 32 qui peut prendre la forme de différentes architectures selon si certaines pièces sont fixées ou en rotation. En entrée, le réducteur 32 est relié à l'arbre BP 28, par exemple par l'intermédiaire de cannelures internes 40a. Ainsi l'arbre BP 28 entraîne un pignon planétaire appelé le solaire 40. Classiquement, le solaire 40, dont l'axe de rotation est confondu avec celui de la turbomachine X, entraîne une série de pignons appelés satellites 42, qui sont équirépartis sur le même diamètre autour de l'axe de rotation X. Ce diamètre est égal au double de l'entraxe de fonctionnement entre le solaire 40 et les satellites 42. Le nombre de satellites 42 est généralement défini entre trois et sept pour ce type d'application.

L'ensemble des satellites 42 est maintenus par un châssis appelé porte-satellites 44. Chaque satellite 42 tourne autour de son propre axe et engrène avec une couronne 46.

Dans une configuration épicycloïdale, l'ensemble des satellites 42 entraine en rotation le porte-satellite 44 autour de l'axe X de la turbomachine. La couronne 46 est fixée au carter moteur ou stator 38 via un porte-couronne 48 et le porte-satellites 44 est fixé à l'arbre de soufflante 30.

Dans une configuration planétaire, l'ensemble des satellites 42 est maintenu par un porte-satellites 44 qui est fixé au carter moteur ou stator 38. Chaque satellite 42 entraine la couronne 46 qui est rapportée à l'arbre de soufflante 30 via un porte-couronne 48.

Chaque satellite 42 est monté libre en rotation à l'aide d'un palier 50, par exemple de type roulement ou palier hydrodynamique. Chaque palier 50 est monté sur un des axes 44b du porte-satellites 44 et tous les axes sont positionnés les uns par rapport aux autres à l'aide d'un ou plusieurs châssis structurels 44a du porte-satellites 44. Il existe un nombre d'axes 44b et de paliers 50 égal au nombre de satellites 42. Pour des raisons de fonctionnement, de montage, de fabrication, de contrôle, de réparation ou de rechange les axes 44b et le châssis 44a peuvent être séparés en plusieurs pièces.

Pour les mêmes raisons que celles citées précédemment, la denture d'un réducteur peut être séparée en plusieurs hélices, notamment une hélice amont et une hélice aval ainsi dénommées par rapport à un plan de symétrie du réducteur et par rapport à une orientation d'amont en aval selon le sens du moteur. Dans notre exemple nous détaillons le fonctionnement d'un réducteur à plusieurs hélices avec une couronne 46 séparée en deux demi-couronnes 46a et 46b.

Une demi-couronne amont 46a est constituée d'une jante 46aa et d'une demi-bride de fixation 46ab. Sur la jante 46aa se trouve l'hélice amont de la denture du réducteur. Cette hélice amont engrène avec celle du satellite 42 qui engrène avec celle du solaire 40.

Une demi-couronne aval 46b est constituée d'une jante 46ba et d'une demi-bride de fixation 46bb. Sur la jante 46ba se trouve l'hélice arrière de la denture du réducteur. Cette hélice aval engrène avec celle du satellite 42 qui engrène avec celle du solaire 40.

La demi-bride de fixation 46ab de la couronne amont 46a et la demi-bride de fixation 46bb de la couronne aval 46 forment la bride de fixation 46c de la couronne 46. La couronne 46 est fixée à un porte-couronne en assemblant la bride de fixation 46c de la couronne et une bride de fixation 48a du porte-couronne 48 à l'aide d'un montage boulonné par exemple.

Les flèches de la figure 2 décrivent l'acheminement de l'huile dans le réducteur 32. L'huile est acheminée dans le réducteur 32 depuis la partie stator 38 dans le dispositif d'alimentation en huile, ici un distributeur 52, par différents moyens qui ne seront pas précisés dans cette vue car ils sont spécifiques selon le type d'architecture du réducteur.

Le distributeur 52 est séparé en deux parties en général chacune répétée du même nombre de satellites. Les gicleurs 52a du distributeur 52 ont pour fonction de lubrifier les dentures et les bras 52b du distributeur 52 ont pour fonction de lubrifier les paliers. L'huile est amenée vers le gicleur 52a pour ressortir à son extrémité 52c afin de lubrifier les dentures.

L'huile est également amenée vers le bras 52b et circule via la bouche d'alimentation 52d du palier. L'huile circule ensuite à travers l'axe dans une ou des zones tampons 44c pour ensuite ressortir par des orifices 44d afin de lubrifier les paliers des satellites 42.

Les conceptions usuelles utilisent une seule coupelle (non représentée sur la figure 2) pour alimenter les gicleurs 52a et les bras 52b. Dans ces conditions, il n'est pas possible de moduler la répartition du débit d'huile entre les postes à lubrifier car les gicleurs 52a et les bras 52b sont alimentés par la même coupelle et par les mêmes injecteurs du système d'injection, avec le même débit.

Ces conceptions usuelles ne permettent pas non plus de différencier le type de lubrifiant utilisé, notamment en termes de viscosité, de température ou de filtration, afin d'utiliser des lubrifiants ayant des propriétés différentes adaptées aux besoins des organes ou engrenages à lubrifier.

En outre, dans ces conceptions usuelles, les gicleurs 52a et bras 52b sont alimentés de manière centrifuge par une seule coupelle placée à un diamètre déterminé, et de ce fait les extrémités des bras52b, qui sont placées sur un diamètre plus élevé que les gicleurs 52a subissent d'importantes pertes de charge.

Il existe également des dispositifs d'alimentation en huile comportant deux coupelles annulaires de lubrification, étagées et coaxiales, alimentant chacune des circuits de distribution d'huile différents du réducteur et configurées pour recevoir de l'huile de deux moyen d'injections d'huile, de manière à former deux étages de lubrification séparés. Les moyens d'injection d'huile sont des rampes d'injection fournissant des jets d'huiles de manière centrifuge. Par conséquent, les rampes d'injection sont proches de l'axe du réducteur et sont difficiles à monter.

L'invention remédie à cet inconvénient en proposant un rouet étagé comportant des coupelles indépendantes pouvant être alimentées de manière centripète par une rampe d'injection plus éloignée de l'axe X et par conséquent plus simple à monter.

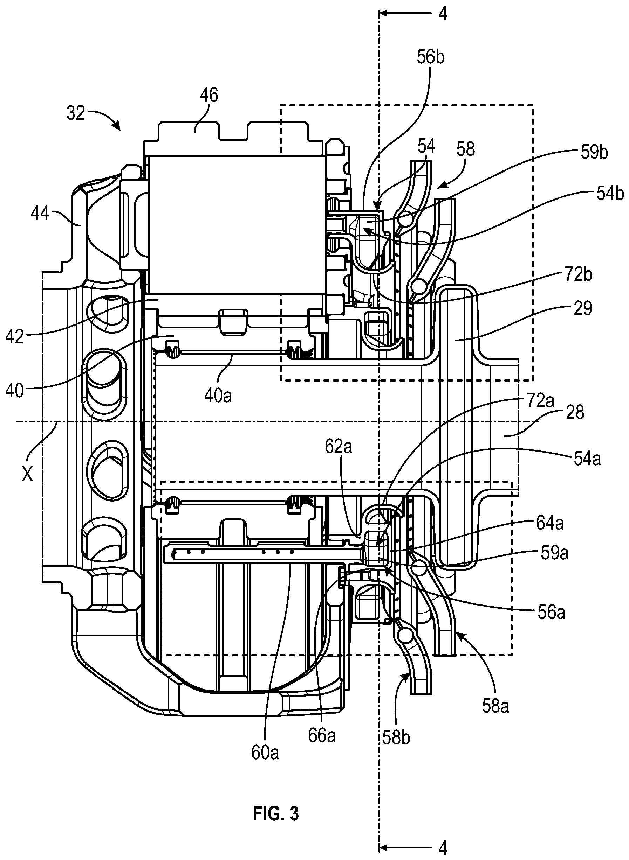

Similairement à la conception précédemment décrite, La figure 3 représente un dispositif d'alimentation en huile 54 destiné à alimenter en huile au moins deux circuits 54a, 54b de distribution d'huile liés à un porte-satellites 44 d'un réducteur à train épicycloïdal comportant au moins un pignon solaire 40, un porte-satellites 44 et une couronne (non représentée) mobiles en rotation relativement les uns par rapport aux autres. Il est à noter qu'un tel dispositif d'alimentation en huile 54 pourrait convenir à l'alimentation en huile d'un réducteur différentiel.

L'huile provient d'un système d'injection d'huile 58 comportant d'au moins un moyen d'injection de l'huile, qui est fixe par rapport au réducteur 32. Le dispositif d'alimentation en huile 54 comporte au moins une coupelle 56a annulaire de lubrification solidaire dudit porte-satellites 44 et sensiblement annulaire et ouverte radialement par rapport à l'axe X du réducteur 32. Les parois de la coupelle 56a délimitent une cavité 59a qui reçoit de l'huile du moyen d'injection d'huile 58 et qui alimente au moins un des circuits 54a de distribution d'huile.

L'invention a ceci d'innovant au regard de l'état de la technique que le dispositif d'alimentation en huile 54 comporte une autre coupelle 56b annulaire de lubrification de sorte à être étagé avec au moins deux étages séparés comportant chacun une coupelle 56a, 56b.

La coupelle 56b annulaire de lubrification est aussi solidaire dudit porte-satellites 44 et sensiblement annulaire et ouverte radialement par rapport à l'axe X du réducteur 32. Les parois de la coupelle 56b délimitent une cavité 59b qui reçoit de l'huile du moyen d'injection d'huile 58 et qui alimente l'autre circuit 54b de distribution d'huile.

Les coupelles 56a, 56b sont coaxiales selon l'axe X du réducteur 32, sont de diamètres différents, et sont toutes deux avantageusement capables de capter de l'huile transmise avec une composante centripète et/ou axiale pour alimenter chacune de manière indépendante un circuit d'huile 54a, 54b associé.

Dans la suite de la présente description, on considère un dispositif d'alimentation en huile 54 comportant deux coupelles 56a, 56b, mais il sera compris que cette configuration n'est pas limitative de l'invention et que le dispositif d'alimentation en huile 54 pourrait comporter un nombre supérieur de coupelles.

En tout état de cause, le dispositif d'alimentation en huile 54 comporte au moins une première coupelle annulaire 56a, dont le circuit de distribution d'huile 54a associé comporte une pluralité de gicleurs d'aspersion 60a, qui sont répartis angulairement de manière régulière autour de l'axe X du réducteur, qui sont disposés à proximité du pignon solaire et /ou des satellites, et qui aspergent le pignon solaire 40 et/ou les satellites 42.

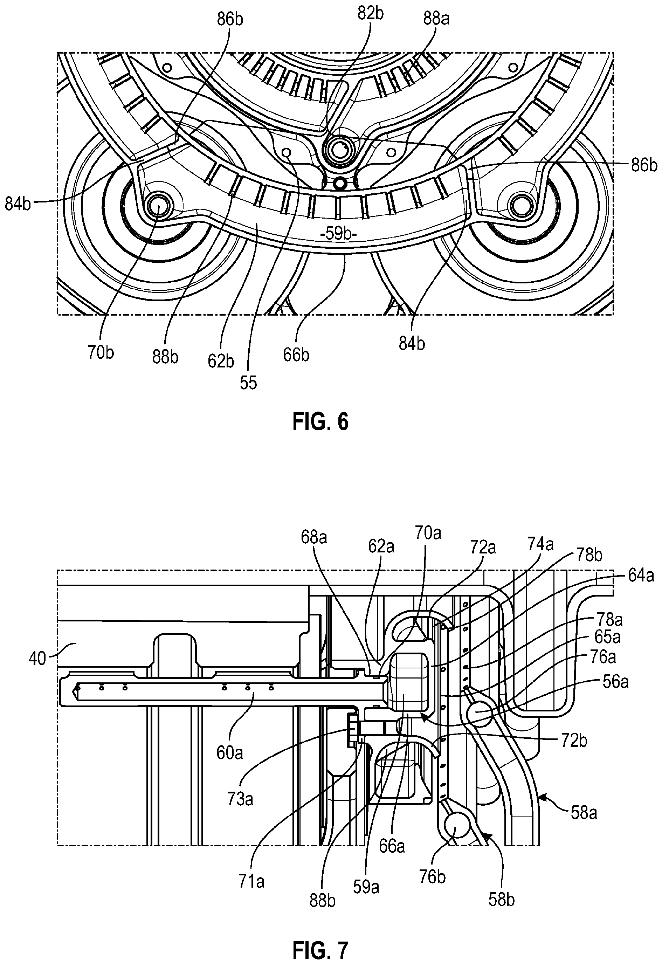

Comme l'illustre dans le détail la figure 7, la première coupelle 56a comporte une première paroi 62a sensiblement annulaire tournée vers le porte-satellites 44, une deuxième paroi 64a sensiblement annulaire opposée, toutes deux transversales par rapport à l'axe X du réducteur et réunies par une troisième paroi 66a périphérique. Les parois 62a 64a, et 66a délimitent au moins un réservoir d'huile 59a correspondant à la cavité ainsi délimitée et qui alimente le circuit de distribution d'huile 54a.

Les gicleurs 60a ont ici été représentés bridés sur la première coupelle 56a, mais cette configuration n'est pas limitative de l'invention. Le gicleur 60a a été représenté bridé sur la première paroi 62a et il comporte à cet effet une portée 68a cylindrique qui s'engage dans un alésage 70a formé dans la première paroi 62a, et un épaulement 71a prenant appui sur cette paroi et traversé par une vis 73a qui est reçue dans la première paroi 62a pour assurer le bridage du gicleur 60a L'alésage 70a constitue un conduit mettant en communication le réservoir 59a avec le gicleur 60a.

En variante les gicleurs 60a pourraient par exemple être d'une pièce et intégrés dans la coupelle 56a.

De la même façon, le dispositif d'alimentation en huile 54 comporte une deuxième coupelle annulaire 56b dont le circuit de distribution d'huile 54b alimente des paliers (non représentés) des satellites 42 sur le porte-satellites 44.

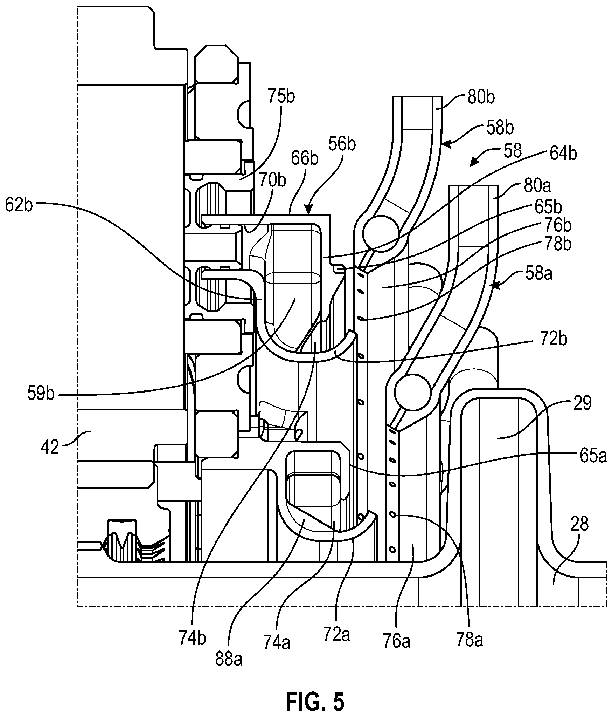

Par exemple, comme l'illustre dans le détail la figure 5, la coupelle 56b comporte une première paroi 62b sensiblement annulaire tournée vers le porte-satellites, une deuxième paroi sensiblement annulaire opposée 64b, toutes deux transversales par rapport à l'axe du réducteur et réunies par une troisième paroi périphérique 66b. Les parois 62b, 64b et 66b délimitent au moins un réservoir d'huile 59b correspondant à la cavité ainsi définie et alimentant le circuit de distribution d'huile 54b. La première paroi 62b comporte des conduits 70b mettant en communication ledit réservoir 59b avec les paliers des satellites 42. Cette communication est réalisée au moyen d'un adaptateur mâle-mâle 75b. Cet adaptateur 75b est solidaire de l'axe du palier du satellite 42 et il est connecté à l'interface femelle que forme le conduit 70b, dans lequel il est reçu.

L'invention a ceci d'innovant que les cavités des réservoirs 59a, 59b sont alimentées en huile par des jets axiaux selon l'axe X, et/ou centripètes tournés en direction de l'axe X du réducteur, et ou tangentiels, à la différence des conceptions connues de l'état de la technique qui utilisent des jets centrifuges tournés à l'opposé de l'axe X du réducteur. Les jets d'huile sont orientés de manière axiale selon une direction qui est parallèle à l'axe X et tournée vers la coupelle 56a, 56b associée, ou de manière centripète selon une direction radiale tournée vers l'axe X, ou de manière tangentielle ou selon un direction inclinée combinant deux de ces directions.

Dès lors que la direction des jets comporte au moins une composante radiale centripète tournée vers l'axe X, cette configuration permet d'utiliser un système d'injection d'huile 58 moins proche de l'arbre BP 28, et par conséquent plus facile à monter. En outre, comme l'illustrent les figures 3 et 5, un tel arbre BP 28 est, pour contrer les effets de désalignement au sein de la turbomachine, généralement équipé d'un dispositif de souplesse 29 de type soufflet, encombrant radialement, qui est situé à proximité du réducteur 32. L'utilisation d'un système d'injection d'huile 58 à composante centripète permet de monter ce système autour du dispositif de souplesse 29 sans pénaliser l'encombrement axial total de l'accouplement du réducteur 32 à l'arbre BP 28.

Globalement chaque coupelle 56a, 56b présente une partie externe ayant une section ayant sensiblement la forme d'un U d'orientation radiale ouvert vers l'axe, qui correspond aux première paroi 62a, 62b deuxième paroi 64a, 64b et troisième paroi 66a, 66b délimitant les réservoirs 59a, 59b, et une partie interne, délimitant une gouttière et prolongeant la partie externe à partir d'une branche du U, c'est-à-dire ici à partir des premières parois 62a, 62b

Les troisièmes parois 66a, 66b des coupelles 56a, 56b sont, par rapports aux cavités formant les réservoirs 59a, 59b qu'elles délimitent, agencées à l'opposé de l'axe du réducteur. Chaque première paroi 62a, 62b se prolonge par une gouttière annulaire 72a, 72b qui s'étend axialement au-delà de la deuxième paroi 64a, 64b, et qui est configurée pour recevoir l'huile projetée par le moyen d'injection du système d'injection d'huile 58.

Sur les figures, de manière non limitative, les gouttières 72a, 72b sont sensiblement en forme de J, et leur concavité 74a, 74b est tournée à l'opposé de l'axe X du réducteur 32 de manière à recevoir des jets d'huile inclinés selon une direction ayant au moins une composante centripète radiale tournée vers l'axe X et une composante axiale ou axiale et tangentielle tournée vers les coupelle 56a, 56b.

En variante, les gouttières 72a, 72b pourraient présenter une forme de V et être alimentées de la même façon, ou présenter une forme de L ouvert à l'opposé des coupelles et dans ce cas être alimentées par des jets purement axiaux ou axiaux et tangentiels.

Cette configuration permet en outre au dispositif d'alimentation en huile 54 d'être alimenté par un système d'injection d'huile 58 étagé comportant au moins deux moyens d'injection d'huile 58a, 58b indépendants alimentant chacun une coupelle 56a, 56b correspondante du dispositif d'alimentation en huile 54.

Cette configuration est particulièrement avantageuse, car elle permet d'une part de s'affranchir des problèmes de pertes de charge inhérents à l'alimentation en huile à partir d'une unique coupelle, et d'autre part car elle permet une alimentation en huile différenciée des coupelles 56a, 56b. Ainsi, il est possible de différencier le type de lubrifiant utilisé, notamment en termes de viscosité, de température ou de filtration, pour utiliser des lubrifiants ayant des propriétés différentes adaptées aux besoins des organes ou engrenages à lubrifier. Par exemple les paliers des satellites 42 peuvent être alimentés avec une huile différente de celle qui est utilisée pour lubrifier les engrenages entre le solaire 40 et les satellites 42. Ainsi, chaque moyen d'injection d'huile 58a, 58b est alimenté avec une huile adaptée au besoin de l'organe du réducteur 32 qui est lubrifié par la coupelle correspondante 56a, 56b.

Les huiles utilisées peuvent ainsi être des huiles différentes qui sont filtrées de façon différente afin d'obtenir des huiles comprenant des tailles minimales de particules différentes pour répondre à des besoins de lubrifications différents et spécifiques.

Comme l'illustrent les figures 3, 5, 7, et 9 chaque moyen d'injection d'huile 58a, 58b comporte une rampe tubulaire annulaire 76a, 76b, de diamètre sensiblement légèrement supérieur à celui de la gouttière 72a, 72b de la coupelle correspondante 56a, 56b, et comportant des perçages uniformément répartis 78a, 78b. Comme l'illustrent les figures 5 et 7, ces perçages 78a, 78b sont tournés vers la gouttière 72a, 72b de la coupelle 56a, 56b en formant un angle déterminé par rapport à l'axe X permettant d'améliorer l'alimentation en huile. Cet angle est choisi préférentiellement de manière que le jet ait une composante radiale vers l'axe X, une composante axialement vers la coupelle 56a, 56b, et éventuellement une composante tangentielle, c'est-à-dire perpendiculaire au plan des figures 3, 5, et 7.

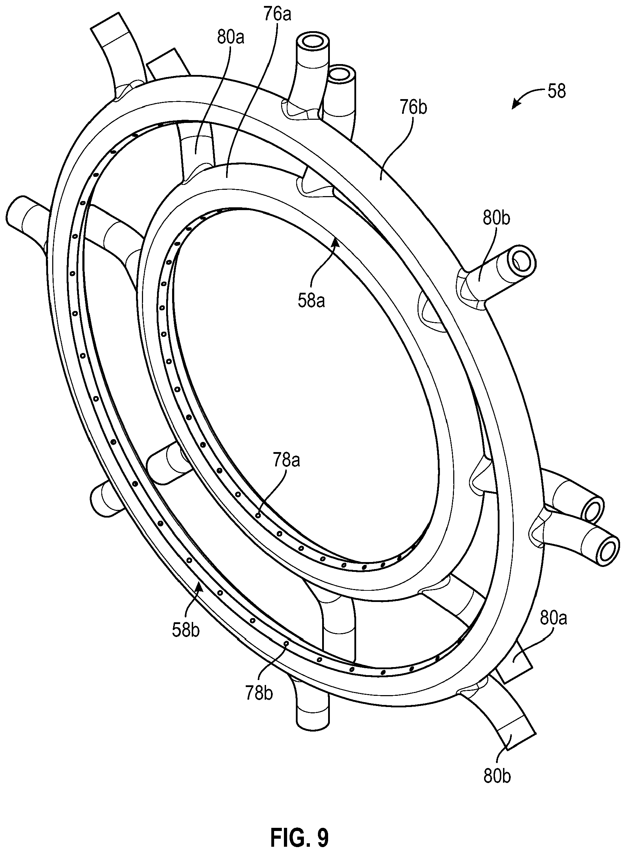

Par ailleurs, comme l'illustre la figure 9, chaque moyen d'injection d'huile 58a, 58b comporte au moins un conduit 80a, 80b globalement radial d'alimentation en huile des rampes annulaires 76a, 76b. De préférence, chaque moyen d'injection d'huile 58a, 58b comporte une pluralité de conduits 80a, 80b uniformément répartis afin d'assurer une alimentation uniforme de la rampe 76a, 76b en termes de débit et de vitesse.

Il convient de remarquer que les rampes 76a, 76b ne sont pas nécessairement continues. Par exemple, chaque moyen d'injection d'huile 58a, 58b pourrait comporter une pluralité de tronçons angulaires de rampes annulaires 76a, 76b alimentés chacun au moins par un conduit 80a, 80b.

Les moyens d'injection d'huile sont portés par un carter (non représenté) de la turbomachine. De ce fait, ils ne sont pas nécessairement liés l'un à l'autre. Dans le cas où les moyens d'injection d'huile sont distants l'un de l'autre, les jets de l'un ne peuvent ainsi perturber les jets de l'autre, ce qui est un avantage supplémentaire de l'invention.

Il en va de même pour les coupelles 56a, 56b qui peuvent ou non être reliées entre elles par des bras structuraux, en fonction des contraintes de coaxialité, de rigidité et d'hyperstatisme au montage.

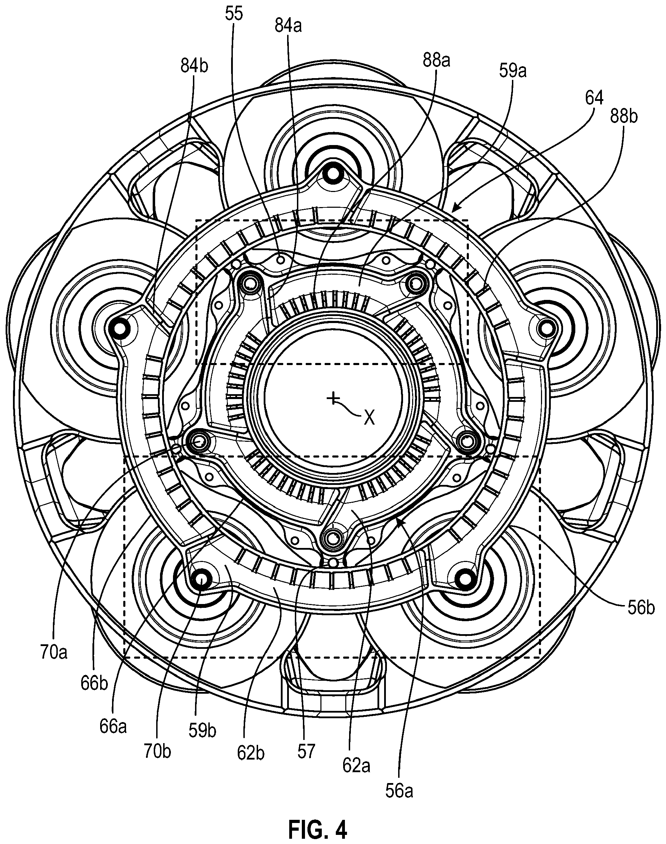

Dans l'exemple non limitatif détaillé ici, la coupelle 56a est reliée à la coupelle 56b par des bras structuraux 57, comme on peut le voir à la figure 4. Les coupelles 56a, 56b forment alors un rouet 54.

Le dispositif d'alimentation en huile est bridé sur le porte-satellites par l'intermédiaire d'éléments axiaux tels que des vis traversant des perçages 55, visibles aux figures 4, 6, et 8.

Différents moyens sont prévus pour assurer l'équilibrage du rouet 54.

Au moins une coupelle peut par exemple comporter une surépaisseur apte à être usinée localement pour permettre l'équilibrage de cette coupelle.

Ici, comme l'illustre la figure 5, c'est la deuxième paroi 64b de la coupelle 56b qui comporte dans une zone 65b une surépaisseur apte à être usinée localement pour permettre l'équilibrage de cette coupelle 56b.

En variante, au moins une coupelle peut comporter une zone apte à recevoir au moins une masselotte d'équilibrage de cette coupelle.

Ici, comme l'illustrent les figures 5 et 7, la deuxième paroi 64a de la coupelle 56a comporte une zone 65a apte à recevoir au moins une masselotte d'équilibrage (non représentée) de cette coupelle 56a.

Par ailleurs, des moyens sont prévus pour améliorer la collecte de l'huile par les gouttières 72a, 72b des coupelles 56a, 56b et l'acheminer vers les réservoirs 59a, 59b.

A cet effet, comme l'illustrent les figures 4, 6, et 8 la partie externe de chaque coupelle 56a, 56b, c'est à dire la partie correspondant aux première paroi 62a, 62b, deuxième paroi 64a, 64b et troisième paroi 66a, 66b qui délimite les réservoirs 59a, 59b, est divisée angulairement, entre ses première et deuxième parois 62a, 64b et 62b ,64b respectivement, en compartiments jointifs 82a, 82b qui délimitent autant de réservoirs 59a, 59b. Cette délimitation est assurée par des parois axiales 84a, 84b agencées aux extrémités angulaires de ces compartiments.82a, 82b.

Comme on le voit dans l'exemple présenté ici à titre d'exemple non limitatif, chaque coupelle 56a, 56b comporte cinq compartiments 82a, 82b, mais il sera compris que ce nombre n'est pas limitatif de l'invention.

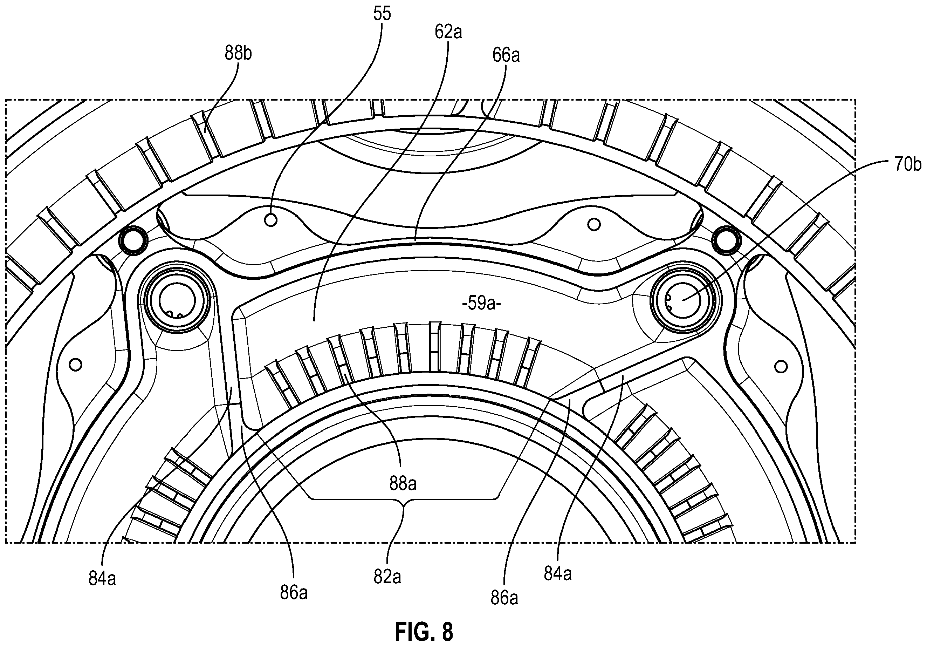

Avantageusement, comme on le voit sur les figures 6 et 8, des extrémités libres 86a, 86b des parois 84a, 84b, sont biseautées et inclinées vers l'axe X du réducteur pour permettre le passage de l'huile d'un réservoir 59a, 59b d'un compartiment 82a, 82b au réservoir 59a, 59b du compartiment voisin.

Les parois 84a et 84b peuvent être inclinées pour favoriser le guidage de l'huile.

La gouttière annulaire 72a, 72b est, quant à elle, continue suivant toute la périphérie de la coupelle 56a, 56b correspondante.

Cette configuration permet d'améliorer la répartition de l'huile entre compartiments. Si tous les réservoirs 59a, 59b sont pleins, l'huile déborde alors vers l'axe X du réducteur 32.

Par ailleurs, la partie interne conformée en gouttière de chaque coupelle 56a, 56b comporte des ailettes 88a, 88b qui s'étendent globalement suivant une direction radiale, entre la gouttière 72a, 72b et au moins la seconde paroi 62a, 62b. Ces ailettes 88a, 88b qui sont configurées pour entrainer l'huile par centrifugation vers le fond du réservoir 59a, 59b correspondant. On notera que les ailettes 88a, 88b peuvent aller au-delà des secondes parois 62a, 62b et s'étendre jusqu'au fond du réservoir correspondant, c'est-à-dire jusqu'aux troisièmes parois périphériques 66a, 66b.

Sur les figures 4à 8, on a représenté des ailettes 88a, 88b qui sont radiales, mais celles-ci peuvent aussi être inclinées par rapport à la direction radiale, et/ou présenter un profil d'aube.

Sur les figures 4, 6 et 8, chaque coupelle 56a, 56b ne comporte qu'une partie interne associée à une série de réservoir 59a, 59b et une partie interne associé concentriques, ces parties interne et externe occupant tout l'encombrement radial de la coupelle.

Il est tout à fait concevable qu'une coupelle comporte plusieurs séries de parties externes et internes, concentriques et divisées selon des pas angulaires différents, afin de former des motifs qui se succèdent angulairement et qui créent des réservoirs placés sur des diamètres différents et alimentant des gicleurs placés sur des diamètres différents.

L'invention fournit également un procédé d'assemblage d'un réducteur à train épicycloïdal ou planétaire comportant un ensemble de lubrification comportant un dispositif d'alimentation en huile 54 et un système d'injection d'huile 58.

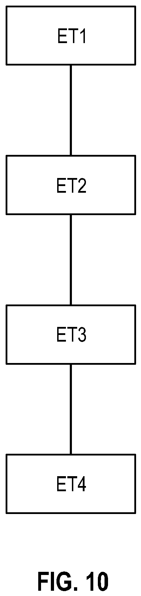

Comme l'illustrent la figure 10, ce procédé comporte une première étape ET1 d'assemblage du réducteur 32 où on assemble le pignon solaire 40, le porte-satellites 44 muni de ses satellites 42 et la couronne 46 les uns aux autres.

Puis, au cours d'une deuxième étape ET2 on introduit le dispositif d'alimentation en huile 54 dans le réducteur 32.

Puis au cours d'une troisième étape ET3, on dispose d'une turbomachine comportant un arbre de turbine BP 28 configuré pour être inséré dans le solaire 40, et on fixe sur un carter (non représenté) de ladite turbomachine le système d'injection d'huile 58.

Enfin, au cours d'une quatrième étape ET4, on insère le réducteur dans le bâti moteur en insérant l'arbre de turbine BP 28 dans le solaire. Le système d'injection d'huile 58 étant naturellement positionné idéalement pour alimenter le rouet 54 une fois le réducteur monté.

L'invention permet de proposer une lubrification différenciée, simple, fiable et efficace pour les différents organes d'un réducteur de turbomachine.

## Revendications

1. Dispositif d'alimentation en huile (54) s'étendant autour d'un axe (X), destiné à alimenter en huile deux circuits (54a, 54b) de distribution d'huile distincts d'un réducteur (32), le réducteur (32) comportant au moins un pignon solaire (40), un porte-satellites (44) et une couronne (46) mobiles en rotation relativement les uns par rapport aux autres, l'huile étant destinée à provenir d'au moins un moyen (58a) d'injection d'huile fixe par rapport au réducteur (32), ledit dispositif (54) étant destiné à être fixé au porte satellites (44) et comportant une coupelle annulaire (56a) de lubrification configurée pour recevoir de l'huile provenant dudit au moins un moyen d'injection d'huile (58a) et pour permettre l'alimentation en huile d'un desdits circuits (54a, 54b) de distribution d'huile,
le dispositif (54) comportant au moins une autre coupelle (56b) de lubrification de sorte à être étagé selon au moins deux étages de lubrification séparés, l'autre coupelle (56b) étant configurée pour recevoir de l'huile provenant d'un autre moyen (58b) d'injection d'huile et pour permettre l'alimentation en huile d'un autre (54b) desdits circuits de distribution d'huile, chaque coupelle alimentant un circuit d'huile (54a, 54b) associé et distinct, les coupelles (56a, 56b) étant coaxiales et de diamètres différents,
lesdites coupelles étant configurées pour recevoir de l'huile de manière axiale selon une direction qui est parallèle à l'axe (X) et tournée vers la coupelle (56a, 56b) associée, ou de manière centripète selon une direction radiale tournée vers l'axe (X), ou de manière tangentielle, ou selon une direction inclinée combinant deux desdites directions,
au moins une coupelle annulaire (56a, 56b) présentant une partie externe ayant une section ayant sensiblement la forme d'un U d'orientation radiale ouvert vers l'axe (X) et une partie interne prolongeant la partie externe à partir d'une branche du U qui délimite une gouttière (72a, 72b) en forme de J ou de V configurée pour recevoir des jets d'huile inclinés selon une direction ayant au moins une composante centripète radiale tournée vers l'axe (X) et une composante axiale ou axiale et tangentielle tournée vers les coupelles (56a, 56b), ou une gouttière en forme de L ouvert à l'opposé des coupelles (56a, 56b) alimentée par des jets d'huile purement axiaux ou axiaux et tangentiels,
la coupelle annulaire (56a, 56b) étant divisée circonférentiellement en compartiments jointifs (82a, 82b) qui délimitent autant de réservoirs (59a, 59b) alimentant les circuits (54a, 54b) de distribution d'huile, séparés par des parois axiales (84a, 84b) agencées aux extrémités angulaires desdits compartiments (82a, 82b), des extrémités libres (86a, 86b) desdites parois axiales (84a, 84b) étant biseautées vers l'axe (X) du réducteur (32) pour permettre le passage de l'huile d'un réservoir (59a, 59b) d'un compartiment (82a, 82b) au réservoir (59a, 59b) du compartiment voisin (82a, 82b).

2. Dispositif (54) selon la revendication précédente, **caractérisé en ce qu'**il comporte au moins :
- une première coupelle annulaire (56a), dont le circuit de distribution d'huile (54a) associé comporte une pluralité de gicleurs répartis circonférentiellement autour de l'axe (X) et qui alimentent en huile le pignon solaire (40) et /ou les satellites (42), et
- une deuxième coupelle annulaire (56b) dont le circuit de distribution d'huile (54b) associé alimente en huile des paliers de satellites (42) du porte-satellites (44).

3. Dispositif (54) selon l'une des revendications 1 ou 2, **caractérisé en ce que** la gouttière (72a, 72b) comporte des ailettes (88a, 88b) s'étendant sensiblement suivant une direction radiale et qui sont agencées de sorte à entraîner l'huile par centrifugation au fond de chacun des réservoirs (59a, 59b).

4. Dispositif selon la revendication précédente, **caractérisé en ce que** les ailettes (88a, 88b) sont radiales ou bien inclinées par rapport à la direction radiale, et/ou présentent un profil d'aube.

5. Dispositif selon l'une des revendications précédentes, **caractérisé en ce que** chaque coupelle (56a) est reliée à la coupelle voisine (56b) par des bras structuraux (57).

6. Dispositif (54) selon l'une des revendications 1 à 5, **caractérisé en ce qu'**au moins une coupelle (56b) comporte une surépaisseur apte à être usinée localement pour permettre l'équilibrage de ladite coupelle (56b).

7. Dispositif (54) selon l'une des revendications 1 à 5, **caractérisé en ce qu'**au moins une coupelle (56a) comporte une zone (65a) apte à recevoir au moins une masselotte d'équilibrage de ladite coupelle (56a).

8. Système d'injection d'huile (58) pour l'alimentation en huile d'un dispositif d'alimentation en huile (54) selon l'une des revendications 1 à 7, **caractérisé en ce qu'**il est étagé et comporte au moins deux moyens d'injection d'huile (58a, 58b) distincts alimentant chacun une coupelle (56a, 56b) correspondante du dispositif (54).

9. Système d'injection d'huile (58) selon la revendication précédente, **caractérisé en ce que** chaque moyen (58a, 58b) d'injection d'huile d'une coupelle comporte une rampe (76a, 76b) d'injection tubulaire annulaire, ou une pluralité de tronçons circonférentiels de rampe tubulaire annulaire, de diamètre sensiblement légèrement supérieur à celui la coupelle (56a, 56b) correspondante, comportant des perçages (78a, 78b) répartis circonférentiellement et destinés à être orientés vers l'ouverture de la gouttière de la coupelle (56a, 56b) correspondante et au moins un conduit (80a, 80b) principalement radial d'alimentation en huile de ladite rampe annulaire (76a, 76b) ou dudit tronçon circonférentiel de rampe annulaire.

10. Système d'injection d'huile (58) selon l'une des revendications 8 ou 9, caractérisé en chaque moyen d'injection (58a, 58b) d'huile est alimenté avec une huile adaptée au besoin d'un organe du réducteur (32) qui est lubrifié par la coupelle correspondante (56a, 56b).

11. Ensemble de lubrification pour un réducteur à train épicycloïdal ou différentiel, **caractérisé en ce qu'**il comporte un dispositif d'alimentation en huile (54) selon l'une des revendications 1 à 9 ou un système d'injection d'huile (58) selon l'une des revendications 8 à 10.

## Patentansprüche

1. Vorrichtung zur Ölversorgung (54), die sich um eine Achse (X) herum erstreckt, die dazu bestimmt ist, zwei unterschiedliche Ölverteilungs-Kreisläufe (54a, 54b) eines Untersetzungsgetriebes (32) mit Öl zu versorgen, wobei das Untersetzungsgetriebe (32) mindestens ein Sonnenrad (40), einen Planetenträger (44) und eine Krone (46), die relativ zueinander rotationsmobil sind, umfasst, wobei das Öl dazu bestimmt ist, aus mindestens einem bezüglich des Untersetzungsgetriebes (32) fixierten Ölinjektionsmittel (58a) zu stammen, wobei die Vorrichtung (54) dazu bestimmt ist, an dem Planetenträger (44) fixiert zu sein und einen ringförmigen Napf (56a) zur Schmierung umfasst, der konfiguriert ist, um das Öl, das aus dem mindestens einen Ölinjektionsmittel (58a) stammt, aufzunehmen, und um die Ölversorgung eines der Ölverteilungs-Kreisläufe (54a, 54b) zu ermöglichen,
wobei die Vorrichtung (54) mindestens einen anderen Napf (56b) zur Schmierung so umfasst, dass er stufenförmig gemäß mindestens zwei getrennten Schmierstufen angeordnet ist, wobei der andere Napf (56b) konfiguriert ist, um das Öl, das aus einem anderen Ölinjektionsmittel (58b) stammt, aufzunehmen, und um die Ölversorgung eines anderen (54b) der Ölverteilungs-Kreisläufe zu ermöglichen, wobei jeder Napf einen zugehörigen und unterschiedlichen Ölkreislauf (54a, 54b) versorgt, wobei die Näpfe (56a, 56b) koaxial und von verschiedenen Durchmessern sind,
wobei die Näpfe konfiguriert sind, um das Öl auf axiale Weise gemäß einer Richtung aufzunehmen, die zur Achse (X) parallel und in Richtung des zugehörigen Napfes (56a, 56b) gedreht ist, oder auf zentripetale Weise gemäß einer radialen, in Richtung der Achse (X) gedrehten Richtung, oder auf tangentiale Weise, oder gemäß einer geneigten Richtung, die zwei der Richtungen kombiniert,
wobei mindestens ein ringförmiger Napf (56a, 56b) ein externes Teil, das einen Abschnitt, der im Wesentlichen die Form eines U einer radial offenen Orientierung in Richtung der Achse (X) aufweist, und ein internes Teil aufweist, das das externe Teil ausgehend von einem Schenkel des U verlängert, das eine Rinne (72a, 72b) in J- oder V-Form begrenzt, konfiguriert zum Aufnehmen von Ölstrahlen, die gemäß einer Richtung geneigt sind, die mindestens eine radiale zentripetale Komponente, in Richtung der Achse (X) gedreht, und eine axiale oder axiale und tangentiale Komponente aufweist, die in Richtung der Näpfe (56a, 56b) gedreht ist, oder eine Rinne in offener L-Form, den Näpfen (56a, 56b) gegenüberliegend, die von rein axialen oder axialen und tangentialen Ölstrahlen versorgt wird,
wobei der ringförmige Napf (56a, 56b) umlaufend in abdichtende Kompartimente (82a, 82b) aufgeteilt ist, die genau so viele Reservoire (59a, 59b) abgrenzen, die die Ölversorgungs-Kreisläufe (54a, 54b) versorgen, die durch axiale Wände (84a, 84b) getrennt sind, die an winkelförmigen Enden der Kompartimente (82a, 82b) angeordnet sind, wobei die freien Enden (86a, 86b) der axialen Wände (84a, 84b) in Richtung der Achse (X) des Untersetzungsgetriebes (32) abgeschrägt sind, um den Durchgang des Öls eines Reservoirs (59a, 59b) eines Kompartiments (82a, 82b) zu dem Reservoir (59a, 59b) des Nachbarkompartiments (82a, 82b) zu ermöglichen.

2. Vorrichtung (54) nach dem vorstehenden Anspruch, **dadurch gekennzeichnet, dass** sie mindestens umfasst:
- einen ersten ringförmigen Napf (56a), von dem der zugehörige ÖlverteilungsKreislauf (54a) eine Vielzahl von umlaufend um die Achse (X) herum verteilten Düsen umfasst, und der das Sonnenrad (40) und/oder die Planeten (42) mit Öl versorgt, und
- einen zweiten ringförmigen Napf (56b), von dem der zugehörige Ölverteilungskreislauf (54b) die Lager der Planeten (42) des Planetenträgers (44) mit Öl versorgt.

3. Vorrichtung (54) nach einem der Ansprüche 1 oder 2, **dadurch gekennzeichnet, dass** die Rinne (72a, 72b) Lamellen (88a, 88b) umfasst, die sich im Wesentlichen einer radialen Richtung folgend erstrecken und die so angeordnet sind, um das Öl durch Zentrifugierung zum Boden jedes Reservoirs (59a, 59b) zu führen.

4. Vorrichtung nach dem vorstehenden Anspruch, **dadurch gekennzeichnet, dass** die Lamellen (88a, 88b) radial sind oder bezogen auf die radiale Richtung geneigt sind und/oder ein Schaufelblattprofil aufweisen.

5. Vorrichtung nach einem der vorstehenden Ansprüche, **dadurch gekennzeichnet, dass** jeder Napf (56a) mit seinem Nachbarnapf (56b) durch Tragarme (57) verbunden ist.

6. Vorrichtung (54) nach einem der Ansprüche 1 bis 5, **dadurch gekennzeichnet, dass** mindestens ein Napf (56b) eine Verdickung umfasst, die geeignet ist, lokal bearbeitet zu werden, um die Auswuchtung des Napfes (56b) zu ermöglichen.

7. Vorrichtung (54) nach einem der Ansprüche 1 bis 5, **dadurch gekennzeichnet, dass** mindestens ein Napf (56a) eine Zone (65a) umfasst, die geeignet ist, mindestens ein Auswuchtgewicht des Napfes (56a) aufzunehmen.

8. Ölinjektionssystem (58) zur Ölversorgung einer Ölversorgungsvorrichtung (54) nach einem der Ansprüche 1 bis 7, **dadurch gekennzeichnet, dass** es stufenförmig angeordnet ist und mindestens zwei unterschiedliche Ölinjektionsmittel (58a, 58b) umfasst, die jeweils einen entsprechenden Napf (56a, 56b) der Vorrichtung (54) versorgen.

9. Ölinjektionssystem (58) nach dem vorstehenden Anspruch, **dadurch gekennzeichnet, dass** jedes Ölinjektionsmittel (58a, 58b) eines Napfes eine ringförmige, rohrförmige Injektionsrampe (76a, 76b) oder eine Vielzahl von umlaufenden ringförmigen, rohrförmigen Rampenteilstücken umfasst, von im Wesentlichen leicht größeren Durchmesser als jener des entsprechenden Napfes (56a, 56b), umfassend umlaufend verteilte und dazu bestimmte Bohrungen (78a, 78b), in Richtung der Öffnung der Rinne des entsprechenden Napfes (56a, 56b) orientiert zu sein, und mindestens eine hauptsächlich radiale Ölversorgungsleitung (80a, 80b) der ringförmigen Rampe (76a, 76b) oder des umlaufenden Teilstücks der ringförmigen Rampe.

10. Ölinjektionssystem (58) nach einem der Ansprüche 8 oder 9, **dadurch gekennzeichnet, dass** jedes Ölinjektionsmittel (58a, 58b) mit einem dem Bedarf eines Elements des Untersetzungsgetriebes (32) angepassten Öl versorgt wird, das durch den entsprechenden Napf (56a, 56b) geschmiert wird.

11. Schmierungsmontage für ein Umlaufräder- oder Differentialgetriebe-Untersetzungsgetriebe, **dadurch gekennzeichnet, dass** sie eine Ölversorgungsvorrichtung (54) nach einem der Ansprüche 1 bis 9 oder ein Ölinjektionssystem (58) nach einem der Ansprüche 8 bis 10 umfasst.

## Claims

1. An oil supply device (54) extending around an axis (X), intended to supply oil to two distinct oil distribution circuits (54a, 54b) of a reduction gear (32), the reduction gear (32) comprising at least one sun pinion (40), a planet carrier (44) and a ring gear (46) which are mobile in rotation relatively with respect to each other, the oil being intended to come from at least one oil injection means (58a) fixed with respect to the reduction gear (32), said device (54) being intended to be fixed to the planet carrier (44) and comprising a lubrication annular cup (56a) configured to receive oil coming from said at least one oil injection means (58a) and to allow the supply of oil to one of said oil distribution circuits (54a, 54b),
the device (54) comprising at least one further lubrication cup (56b) so that it can be staged in at least two separate lubrication stages, the further cup (56b) being configured to receive oil coming from a further oil injection means (58b) and to allow the supply of oil to a further (54b) of said oil distribution circuits, each cup supplying an associated and distinct oil circuit (54a, 54b), the cups (56a, 56b) being coaxial and of different diameters,
said cups being configured to receive oil axially in a direction that is parallel to the axis (X) and facing the associated cup (56a, 56b), or centripetally in a radial direction facing the axis (X), or tangentially, or according to an inclined direction combining two of said directions,
at least one annular cup (56a, 56b) having an outer part having a section substantially in the shape of a U of radial orientation open towards the axis (X) and an inner part extending the outer part starting from a branch of the U which delimits a J-or V-shaped gutter (72a, 72b) configured to receive oil jets inclined according to a direction having at least one radial centripetal component facing the axis (X) and an axial component or axial and tangential component facing towards the cups (56a, 56b), or an open L-shaped gutter opposite the cups (56a, 56b) supplied by purely axial oil jets or axial and tangential oil jets,
the annular cup (56a, 56b) being divided circumferentially into adjoining compartments (82a, 82b) which delimit as many reservoirs (59a, 59b) supplying the oil distribution circuits (54a, 54b), separated by axial walls (84a, 84b) arranged at the angular ends of said compartments (82a, 82b), free ends (86a, 86b) of said axial walls (84a, 84b) being bevelled towards the axis (X) of the reduction gear (32) to allow the passage of oil from a reservoir (59a, 59b) of one compartment (82a, 82b) to the reservoir (59a, 59b) of the adjacent compartment (82a, 82b).

2. The device (54) according to the preceding claim, **characterized in that** it comprises at least:
- a first annular cup (56a), the associated oil distribution circuit (54a) of which comprises a plurality of nozzles distributed circumferentially around the axis (X) and which supply oil to the sun pinion (40) and/or the planet gears (42), and
- a second annular cup (56b), the associated oil distribution circuit (54b) of which supplies oil to the planet gear bearings (42) of the planet carrier (44).

3. The device (54) according to one of claims 1 or 2, **characterized in that** the gutter (72a, 72b) comprises fins (88a, 88b) extending substantially in a radial direction and which are arranged to drive the oil by centrifugation at the bottom of each of the reservoirs (59a, 59b).

4. The device according to the preceding claim, **characterized in that** the fins (88a, 88b) are radial or inclined with respect to the radial direction, and/or have a vane profile.

5. The device according to one of the preceding claims, **characterized in that** each cup (56a) is connected to the adjacent cup (56b) by structural arms (57).

6. The device (54) according to one of claims 1 to 5, **characterized in that** at least one cup (56b) comprises an extra thickness that can be machined locally to allow balancing of said cup (56b).

7. The device (54) according to one of claims 1 to 5, **characterized in that** at least one cup (56a) comprises a zone (65a) capable of receiving at least one weight for balancing said cup (56a).

8. An oil injection system (58) for supplying oil to an oil supply device (54) according to one of claims 1 to 7, **characterized in that** it is staged and comprises at least two distinct oil injection means (58a, 58b) each supplying a corresponding cup (56a, 56b) of the device (54).

9. The oil injection system (58) according to the preceding claim, **characterized in that** each oil injection means (58a, 58b) of a cup comprises an annular tubular injection manifold (76a, 76b), or a plurality of circumferential segments of annular tubular manifold, of diameter substantially slightly larger than that of the corresponding cup (56a, 56b), comprising circumferentially distributed holes (78a, 78b) intended to be oriented towards the opening of the gutter of the corresponding cup (56a, 56b) and at least one mainly radial duct (80a, 80b) for supplying oil to said annular manifold (76a, 76b) or said annular manifold circumferential segment.

10. The oil injection system (58) according to one of claims 8 or 9, **characterized in that** each oil injection means (58a, 58b) is supplied with an oil adapted to the requirements of a member of the reduction gear (32) which is lubricated by the corresponding cup (56a, 56b).

11. A lubrication set for an epicyclic or differential reduction gear, **characterized in that** it comprises an oil supply device (54) according to one of claims 1 to 9 or an oil injection system (58) according to one of claims 8 to 10.
